Europäisches Patentamt

European Patent Office

Office européen des brevets

(19)

(11) Veröffentlichungsnummer: **0 073 975**
**B1**

(12) **EUROPÄISCHE PATENTSCHRIFT**

(45) Veröffentlichungstag der Patentschrift: 09.05.90

(51) Int. Cl.⁵: **B 60 C 7/22,** B 29 D 30/02

(21) Anmeldenummer: 82107515.7

(22) Anmeldetag: 18.08.82

(54) Elastischer Vollreifen.

(30) Priorität: 03.09.81 DE 3134860
07.08.82 DE 3229580

(43) Veröffentlichungstag der Anmeldung:
16.03.83 Patentblatt 83/11

(45) Bekanntmachung des Hinweises auf die
Patenterteilung:
09.05.90 Patentblatt 90/19

(84) Benannte Vertragsstaaten:
AT BE CH DE FR GB IT LI LU NL SE

(56) Entgegenhaltungen:
DE-A-1 480 954
FR-A-1 324 889
FR-A-1 575 009
FR-A-2 160 868
GB-A-1 432 861
US-A-2 906 312

(73) Patentinhaber: Continental Aktiengesellschaft
Königsworther Platz 1
D-3000 Hannover 1 (DE)

(72) Erfinder: Mahling, Rolf
Leipziger Strasse 18
D-3540 Korbach (DE)
Erfinder: Danzeglocke, Ernst
Kleeköppel 1
D-3540 Korbach (DE)

Courier Press, Leamington Spa, England.

**Beschreibung**

Die Erfindung betrifft einen Vollreifen gemäß dem Oberbegriff von Patentanspruch 1.

Bekanntlich wird durch das Einbringen von Fasern in die Kautschuckmischungen für Vollreifen die Herstellung eines Vollreifens verbilligt und das so hergestellte Vulkanisat verstrammt. Dabei werden die Fasern in Abhängigkeit vom Anwendungsgebiet in unterschiedliche Schichten des Vollreifens eingebracht. Bei solchen Vollreifen, die aus einem Laufbandgummi, einem federnden Gummikissen und einem Fußring aus zähhartem Gummi bestehen, ist es vor allem für den Fußringgummi mit den in ihm umlaufenden Stahldrahteinlagen wichtig, eine äußerst zähharte Mischung vorzusehen, damit der z.B. mit Preßsitz auf eine zylindrische Fläche der Felge aufgezogene Reifen auch bei starken Belastungen einen sicheren Sitz beibehält. Als Materialien für einzubringende Fasern kommen für jede Art von Vollreifen z.B. in Frage Mineralfasern wie Asbest, Kunstfasern wie Reyon, Nylon, PE u.a., tierische Fasern wie Wolle und pflanzliche Fasern wie Holz. Auch Metall, Glas und Kohlenstoff können geeignet sein.

Es hat sich bei bekannten Vollreifen mit in den Fußringgummi eingebrachten Faserteilchen gezeigt, daßaufgrund der ständig wechselnden Belastungen im Betrieb die Faserteilchen innerhalb der Gummimischung zu arbeiten beginnen und den sie umgebenden Gummi aufgrund dieser inneren Bewegungen beschädigen, so daß er häufig schon nach kurzer Zeit brüchig wird und den Sitz des Reifens auf dem Felgenkörper gefährdet.

Der Erfindung liegt deshalb die Aufgabe zugrunde, einen Vollreifen anzugeben, bei dem im Betrieb eine Schädigung des Gummis durch ein Arbeiten der eingebrachten Faserteilchen vermieden wird, so daß ein sicherer Felgensitz und ein zuverlässiger Betrieb gewährleistet wird.

Diese Aufgabe wird erfindungsgemäß dadurch die kennzeichnenden Merkmale von Patentanspruch 1.

Dabei wird das Haftsystem direkt in die Kautschukmischung eingegeben. Durch die chemische Bindung zwischen der Faseroberfläche und dem benachbarten Gummi liegen im fertigen Reifen die Fasern nicht mehr als lockere Fremdkörper im Gummi, so daß sie auch keine "Sägewirkung" bei inneren Bewegungen mehr ausüben könne, vielmehr bilden sie mit dem Gummi eine fest verbundene Einheit.

Mit der Erfindung werden in vorteilhafter Weise zähharte Gummimischungen bisher nicht errechter Qualität für Fußringe erzielt, so daß die damit hergestellten Vollreifen eine wesentlich größere Lebensdauer aufweisen.

Dabei kann man gemäß einer Ausgestaltung der Erfindung auf die üblichen Stahldrahtkerne im Fußgummi ganz verzichten, wenn zumindest in der Fußringgummischicht Fasern mit einem Gewichtsanteil von mindestens 5% des gewichts des Fußrings eingebracht sind und die Schichtdicke des Fußringgummis 10 bis 90% der Reifenquerschnittshöhe beträgt.

Dieser Ausgestaltung liegt die Erkenntnis zugrunde, daß bei einer Einbettung von Fasern im Fußring mit einem Gewichtsanteil von über 5% und bei Einhaltung einer Mindestschichtdicke für den Fußring, die von der geforderten Einsatzbelastung des Reifens abhängt, eine so gute Verstrammung erzielt wird, daß auf die schweren und teuren Stahldrahtkerne gänzlich verzichtet werden kann. Zur Erzielung eines zuverlässigen Felgensitzes sollte der Reifen im montierten Zustand eine Aufweitung des Innendurchmessers um 0,5 bis 10% gegenüber dem nichtmontierten Zustand aufweisen.

Der erfindungsgemäße Reifen weist neben einer erheblichen Gewichtsreduzierung durch den Wegfall der Stahldrahtkerne vor allem den Vorteil einer einfacheren und billigeren Herstellung auf (Anspruch 7).

Als weiterer Vorteil ist die nicht unbeträchtliche Rollwiderstandsverringerung anzuführen, die vor allem durch die erhöhte Starrheit hervorgerufen wird.

Weiterhin eignet sich die Erfindung durch Einbeinden von Fasern in das federnde Gummikissen hervorragend dazu, die Standfestigkeit bestimmter Fahrzeuge mit Vollreifen zu erhöhen.

Selbst bei Vollreifen mit nur einer Gummischicht oder mit zwei unterschiedlichen Gummischichten lassen sich mit der Erfindung technische Vorteile erzielen.

Vorteilhafte Ausgestaltungen der Erfindung sind den Unteransprüchen zu entnehmen.

Nachfolgend werden zwei Ausführungsbeispiele der Erfindung beschrieben und anhand einer Zeichnung erläutert.

Es zeigt

Fig. 1 einen Vollreifen in einem radialen Teilschnitt,

Fig. 2 eine Teildraufsicht auf eine Umfangsfläche in Höhe der Linie II—II,

Fig. 3 einen weiteren Vollreifen in einem radialen Teilschnitt.

Der Vollreifen aus Gummi oder gummiähnlichen Stoffen besteht im wesentlichen aus drei Schichten, nämlich einem verschließarmen Laufbandgummi 1, einem federnden Gummikissen 2 und einem Fußring 3 aus zähhartem Gummi mit darin eingebetteten Stahldrahtkernen 4.

Im Gummi des Fußrings 3 und im vorliegenden Beispiel auch des federnden Gummikissens 2 sind Fasern 5 eingebracht, die mittels eines Haftsystems, das z.B. das bekannte Resorcin/Hexa-System sein kann, chemisch an dem benachbarten Gummi gebunden sind. Die chemische Bindung wird in der Zeichnung schematisch durch eine Punktierung in der unmittelbaren Nachbarschaft der Fasern 5 angedeutet.

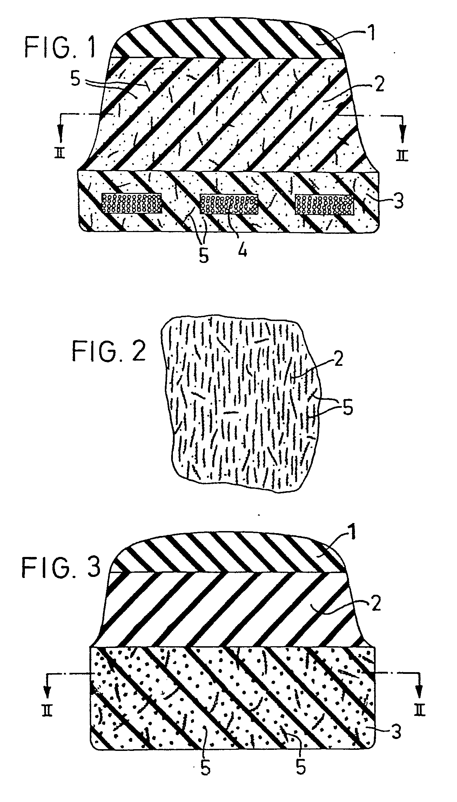

Der Vollreifen gemäß Fig. 3 unterscheidet sich von dem nach Fig. 1 dadurch, daß der Fußring 3 etwa auf die halbe Reifenquerschnittshöhe verbreitet ist und keine Stahldrahtkerne mehr aufweist und daß die haftend eingebetteten Fasern sich ausschließlich im Fußring 3 befinden. Bei Bedarf können sie jedoch selbstverständlich auch in den anderen beiden Schichten vorhanden sein. Es sind für den Fußring 3 auch andere Dickenverhältnisse zwischen 10 und 90% der Reifenquerschnittshöhe möglich, die vom jeweiligen Einsatzzweck des Reifens abhängen.

Der Gewichtsanteil des Fasermaterials 5 am Gesamtgewicht des Fußrings 3 sollte mindestens 5% betragen. Anteile von 15% bis 20% haben sich als günstig erwiesen.

Bei einem Vollreifen mit den vorstehend beschriebenen Eigenschaften erübrigt sich der Einbau bisher üblicher Stahldrahtkerne, ohne daß die Sicherheit gegenüber einem Lösen von der Felge vernachlässigt wird. Der Reifen wird mittels Preßsitz auf einer nicht gezeichneten Felge montiert, wobei zur Erzeugung einer Vorspannung für einen sicheren Sitz der Innendurchmesser des Reifens um etwa 5% gegenüber dem nichtmontierten Zustand aufgeweitet ist. Weitere Befestigungsmittel für einen sicheren Sitz des Reifens auf der Felge sind dann nicht erforderlich.

Für die Fasern 5 wird bevorzugt Kunstfasermaterial verwendet, z.B. ein Gemisch aus Reyon und Nylon. Besonders günstig ist es, die Fasern 5 entweder von Abfällen aus der Reifencordgeweberstellung oder aus dem Cordgewebe von Altreifen zu gewinnen.

Die Fasern 5 sollten eine Länge von 1 bis 5 mm aufweisen, und das Verhältnis Länge zu Durchmesser sollte größer als 20 sein.

Die zerkleinerten Fasern 5 wie auch die Stoffe für das zugehörige Haftsystem werden der Kautschukmischung vor dem Kalandrieren beigefügt, so daß die zunächst ungeordnet eingebrachten Faserteilchen 5 beim Kalandriervorgang bevorzugt in Bewegungsrichtung der Walzen ausgerichtet werden. Dies hat zur Folge, daß die Faserteilchen 5 beim Konfektionieren des Vollreifens bevorzugt im Umfangsrichtung angeordnet sind, so daß eine besonders hohe Verstrammung im Fußring 3 erzielt wird.

Es sollte angemerkt werden, daß bei Bedarf die Faserteilchen 5 auch aus metallischem Material bestehen können, so daß z.B. die vermessingten Stahldrähte von Altluftreifen Verwendung finden können. In einem solchen Fall ist dann selbstverständlich auf ein bekanntes Haftsystem für Messing bzw. Stahl zurückzugreifen.

Es können auch Fasern 5 aus anderen Materialien in Frage kommen, wobei es in jedem Fall wichtig ist, daß der zugehörigen Kautschuckmischung ein Haftsystem beigefügt wird, das eine feste chemische Bindung zwischen dem gewählten Fasermaterial und dem benachbarten Gummi bewirkt.

Das oben erwähnte Einbringen von Fasermaterial auch in das federnde Gummikissen 2 hat sich besonders gut bei Vollreifen bewährt, die für Gabelstapler mit großen Stapelhöhen vorgesehen sind. In solchen Fällen wird durch das Einbinden von Faserteilchen 5 in das Gummikissen 2 die Standfestigkeit des Fahrzeugs beträchtlich erhöht.

## Patentansprüche

1. Vollreifen aus Gummi oder gummiähnlichen Stoffen, der aus einer oder aus mehreren Schichten aufgebaut ist und bei dem zumindest in der unteren Schicht Fasern eingebracht sind, dadurch gekennzeichnet, daß die Fasern (5) eine Länge von 1 bis 5 mm aufweisen und mittels eines der Kautschukmischung für den Vollreifen beigefügten Haftsystems chemisch an dem sie umgebenden Gummi gebunden sind und daß die Fasern (5) bevorzugt in Umfangsrichtung angeordnet sind.

2. Vollreifen nach Anspruch 1 mit einem verschleißarmen Laufbandgummi (1), einem federnden Gummikissen (2) und einem Fußring (3) aus zähhartem Gummi mit darin eingebetteten, in Umfangsrichtung umlaufenden Stahldraht- oder Stahlbandkernen (4), dadurch gekennzeichnet, daß mittels eines Haftsystems chemisch gebundene Fasern (5) im Fußringgummie (3) und/oder im federnden Gummikissen (2) eingebracht sind.

3. Vollreifen nach den Ansprüchen 1 oder 2, gekennzeichnet durch ein Resorcin/Hexamethylentetramin-System als Haftsystem.

4. Vollreifen nach Anspruch 1, gekennzeichnet durch Fasern (5) mit einem Verhältnis Länge: Durchmesser von mindestens 20.

5. Vollreifen nach Anspruch 1, gekennzeichnet durch Fasern (5) aus synthetischem Material, insbesondere aus Reyon und/oder Nylon.

6. Vollreifen nach Anspruch 1, gekennzeichnet durch metallische Fasern (5).

7. Vollreifen nach Anspruch 1, dadurch gekennzeichnet, daß zumindest in der Fußringgummischicht (3) Fasern (5) mit einem Gewichtsanteil von mindestens 5% des Gewichts des Fußrings (3) eingebracht sind, daß die Schichtdicke des Fußringgummis (3) 10 bis 90% der Reifenquerschnittshöhe beträgt und daß die haftend eingebetteten Fasern (5) übliche umlaufende Metalleinlagen wie Stahldrahtkerne ersetzen.

8. Vollreifen nach Anspruch 7, dadurch gekennzeichnet, daß die Fasern (5) im Fußring (3) 15 bis 20% des Fußringgewichts ausmachen.

9. Vollreifen nach Anspruch 7, dadurch gekennzeichnet, daß die Schichtdicke des Fußringgummis (3) etwa 50% der Reifenquerschnittshöhe beträgt.

10. Vollreifen nach Anspruch 7, dadurch gekennzeichnet, daß der Reifen zur Erzielung einer Vorspannung im montierten Zustand eine Aufweitung des Innendurchmessers um 0,5 bis 10% aufweist.

11. Vollreifen nach Anspruch 10, dadurch gekennzeichnet, daß die Aufweitung des Innendurchmessers gegenüber dem nichtmontierten Zustand etwa 5% beträgt.

## Revendications

1. Bandage plein en caoutchouc ou en matières analogues au caoutchouc, qui est constitée d'une ou de plusieurs couche et dans lequel des fibres sont incorporées, au moins dans la couche inférieure, caractérisé en ce que les fibres (5) ont une longueur de 1 à 5 mm et sont liées chimiquement avec le caoutchouc environnant au moyen d'un système d'adhérence ajouté au mélange caoutchouté pour le bandage plein et en ce que les fibres (5) sont disposées avantageusement dans une direction circonférentielle.

2. Bandage plein selon la revendication 1, comportant une bande de roulement (1) en caoutchouc de faible usure, un rembourrage élastique (2) en caoutchouc et un anneau de base (3) en caoutchouc dur et résistant, dans lequel sont incorporées des tringles en fil d'acier ou en ruban d'acier (4) disposées dans une direction circonférentielle, caractérisé en ce que des fibres (5) liées chimiquement au moyen d'un système d'adhérence sont incorporées dans le caoutchouc (3) de l'anneau de base et/ou dans le rembourrage élastique en caoutchouc (2).

3. Bandage plein selon une des revendications 1 ou 2, caractérisé par un système résorcine/hexaméthylène tétramine comme système d'adhérence.

4. Bandage plein selon la revendication 1, caractérisé par des fibres (5) ayant un rapport longueur: diamètre d'au moins 20.

5. Bandage plein selon la revendication 1, caractérisé par des fibres (5) en matière synthétique, notamment en rayonne et/ou en nylon.

6. Bandage plein selon la revendication 1, caractérisé par des fibres métalliques (5).

7. Bandage plein selon la revendication 1, caractérisé en ce qu'il est prévu au moins dans la couche de caoutchouc (3) de l'anneau de base des fibres (5) en proportion pondérale d'au moins 5% du poids de l'anneau de base (3), en ce que l'épaisseur de couche du caoutchouc (3) de l'anneau de base est comprise entre 10 et 90% de la hauteur de section du bandage et en ce que les fibres (5) incorporées de façon adhérente remplacent des éléments rapportés classiques circonférentiels en métal comme des tringles en fil d'acier.

8. Bandage plein selon la revendication 7, caractérisé en ce que les fibres (5) prévues dans l'anneau de base (3) forment 15 à 20% du poids de l'anneau de base.

9. Bandage plein selon la revendication 7, caractérisé en ce que l'épaisseur de couche du caoutchouc (3) de l'anneau de base s'élève à environ 50% de la hauteur de section du bandage.

10. Bandage plein selon la revendication 7, caractérisé en ce que le bandage est soumis, pour obtenir une précontrainte dans la condition montée, à une augmentation de diamètre intérieur de 0,5 à 10%.

11. Bandage plein selon la revendication 10, caractérisé en ce que l'augmentation du diamètre intérieur par rapport à la condition non montée s'élève à environ 5%.

## Claims

1. Solid tyre, which is formed from rubber or rubber-like substances and constructed from one or a plurality of layers, and wherein fibres are inserted in at least the lower layer, characterised in that the fibres (5) have a length of 1 to 5 mm and are chemically bonded to the rubber surrounding them by means of an adhesive system which is added to the rubber mixture for the solid tyre, and in that the fibres (5) preferably extend in the circumferential direction.

2. Solid tyre according to claim 1, comprising a low-wear rubber tread strip (1), a resilient rubber pad (2) and a base ring (3) formed from tough rubber and comprising steel wire or steel band cores (4), which are embedded therein and extend in the circumferential direction, characterised in that fibres (5), which have been chemically bonded by means of an adhesive system, are inserted in the base ring rubber (3) and/or in the resilient rubber pad (2).

3. Solid tyre according to claim 1 or 2, characterised by a resorcinol/hexamethylene tetramine system being used as the adhesive system.

4. Solid tyre according to claim 1, characterised by fibres (5) with a ratio of length:diameter of at least 20.

5. Solid tyre according to claim 1, characterised by fibres (5) formed from synthetic material, more especially from rayon and/or nylon.

6. Solid tyre according to claim 1, characterised by metallic fibres (5).

7. Solid tyre according to claim 1, characterised in that fibres (5), with a weight proportion of at least 5% of the weight of the base ring (3), are inserted in at least the base ring rubber layer (3), in that the layer thickness of the base ring rubber (3) is 10 to 90% of the cross-sectional height of the tyre, and in that the adhesively embedded fibres (5) replace conventional, circumferential, metal insert plies such as steel wire cores.

8. Solid tyre according to claim 7, characterised in that the fibres (5) in the base ring (3) amount to 15 to 20% of the base ring weight.

9. Solid tyre according to claim 7, characterised in that the layer thickness of the base ring rubber (3) is substantially 50% of the cross-sectional height of the tyre.

10. Solid tyre according to claim 7, characterised in that the tyre has a 0.5 to 10% expansion of the internal diameter to achieve a pre-stressing action in the assembled state.

11. Solid tyre according to claim 10, characterised in that the expansion of the internal diameter is substantially 5% compared with the non-assembled state.

FIG. 1

5

1

2

II

II

3

5

4

FIG. 2

2

5

FIG. 3

1

2

II

II

3

5

5

1